# EUROPÄISCHE PATENTANMELDUNG

(11) **EP 1 714 557 A1**
(43) Veröffentlichungstag der Anmeldung: **25.10.2006**
(21) Anmeldenummer: 05008627.1
(22) Anmeldetag: 20.04.2005
(51) Int. Cl.: A23C 9/18, A23F 5/38, A23F 3/32, A23L 1/00, A23G 1/00

(54) **Instantprodukt**

(71) Anmelder: Keme Food Engineering AG, 5001 Aarau (CH)
(72) Erfinder: De Groote, Evelyne, Dr., 1763 Granges-Paccot (CH); Keme, Tomas, 5000 Aarau (CH); Perren-Egli, Rainer, Dr., 6022 Grosswangen (CH)
(74) Vertreter: Jeck, Anton

(57) **Zusammenfassung**

Die Erfindung betrifft ein Instantprodukt mit mindestens einem löslichen, vorzugsweise pulvrigen Lebensmittelprodukt mit mindestens einem zuckerartigen, mit dem Lebensmittelprodukt vermischten und verbindbaren Trägerstoff, der eine definierte Form des Instantprodukts erlaubt.

## Beschreibung

Die Erfindung betrifft ein Instantprodukt nach dem Oberbegriff des Anspruchs 1 sowie ein Verfahren zur Herstellung des Instantprodukts nach Anspruch 12.

Es sind diverse Instantprodukte, wie Kaffee, Kakao, Schokolade, Tee, Milch, Säfte sowie Gemische daraus, bekannt. Dabei handelt es sich um Lebensmittelprodukte in Pulverform, die leicht löslich sind. Die Instantprodukte werden als Pulver in luft- und/oder wasserdichte Beutel oder Dosen abgepackt. Diese in Verpackungen abgefüllten Instantprodukte haben den Nachteil, dass sie zum einen aufgrund ihrer pulvrigen Form verschüttet werden können und zum anderen nicht mit Zucker oder zuckerähnlichem Süßstoff der gewünschten Menge versetzt sind, so dass bei ihrer Verwendung zusätzlich Zucker oder Süßstoff verwendet werden müssen. Zudem ist es bekannt, dass Instantprodukte, die lose in Beuteln verkauft werden, schwieriger zu dosieren sind.

Ausgehend von dem obigen Stand der Technik liegt der Erfindung die Aufgabe zugrund, hier Abhilfe zu schaffen und das gattungsgemäße Instantprodukt so weiter zu entwickeln, dass es ohne jegliche obige Nachteile sofort eingesetzt werden kann.

Die gestellte Aufgabe wird erfindungsgemäß mit den Merkmalen des Anspruchs 1 gelöst.

Man erkennt, dass die Erfindung jedenfalls dann verwirklicht ist, wenn es sich um ein Instantprodukt handelt, das sämtliche Bestandteile eines trinkfertigen Getränkes aufweist, das zudem problemlos und gezielt dosiert zubereitet werden kann.

Es ist keine weitere Süßung notwendig.

Das erfindungsgemäße Instantprodukt wird so hergestellt, dass eine definierte Menge an Kristallen vom Trägerstoff, der aus Zucker oder zuckerähnlichem Werkstoff besteht, befeuchtet und mit einer definierten Menge der übrigen Zutaten in geeignetem Verhältnis vermischt wird. Danach wird die Mischung in eine Matriz gebracht und leicht angepresst. Schließlich werden die Instantprodukte aus den Matrizen ausgestoßen und unter geeigneten Bedingungen getrocknet.

Bei Befeuchtung des Trägerstoffes wird seine Oberfläche klebrig, verbindet sich mit den anderen Lebensmittelprodukten und beim leichten Zusammenpressen in vorgegebenen Matrizen wird die gewünschte Form des Instantproduktes erreicht. Die Klebrigkeit der Oberfläche von Kristallen hängt nicht nur von den Stoffeigenschaften des eingesetzten Trägerstoffes, sondern auch den übrigen
Zutaten ab. Im Falle der lsomaltulose ist die Klebrigkeit sehr gering, was auf die reduzierte Löslichkeit von lsomaltulose zurück zu führen ist. Auf jeden Fall wird von den Trägerstoffkristallen oder -Agglomeraten eine oberste Schicht angelöst, die sich verbinden kann. Durch die anschließende Trocknung werden diese Grenzflächen sodann verbunden. Nach dem Trocknungsvorgang erhält das Instantprodukt eine stabile Form, die sich erst während der Zubereitung des Getränkes auflöst. Der Benutzer muss Wasser oder Milch in seine Tasse oder Glas füllen, die z. B. tablettenförmigen Instantprodukte ins Glas geben und sodann den Inhalt vermischen. Das Getränk ist trinkfertig.

Weitere zweckmäßige und vorteilhafte Ausgestaltungen der Erfindung gehen aus den Unteransprüchen hervor.

Eine besonders zweckmäßige Ausgestaltung der Erfindung sieht vor, dass als Lebensmittelprodukte pflanzliche Extrakte, z. B. Tee-Extrakte, Kaffee-Extrakte, Kakaopulver, Fruchtextrakte o. ä. verwendet werden. Im Rahmen dieses Erfindungsgedanken kann das Produkt auch Aromen, Verdickungsmittel, Farbstoffe, Carbonate, Intensivsüßstoffe, Nahrungsfasern, Polysaccharide, Milchbestandteile, Vitamine, Mineralstoffe o. a. Zusätze enthalten.

Das Produkt besteht aus einer kristallinen Zuckermatrix, die von anderen Bestandteilen durchsetzt ist. Die kristalline Matrix definiert ein dreidimensionales Netzwerk, das die Form des Produktes stabilisiert. Anstelle einer kristallinen Zuckermatrix kann die Matrix aus anderen kristallinen Stoffen (Zuckeraustauschstoffe) oder aus Agglomeraten von amorph erstarrten Komponenten (Zuckerarten, Zuckeraustauschstoffe, Polysaccharide, Oligosaccharide, Malzextrakte oder Milchbestandteile etc.) bestehen.

Die Zusammensetzung und Dosierung des Produktes ist derart gewählt, dass eine definierte Portion, d. h. 1-5 Stücke des Produktes, eine Portion Kalt- oder Heißgetränk ergibt. Das Instantprodukt ist derart geformt, dass die Form des Produktes stabil ist. Es sind verschiedene Formen möglich, wobei bei den Formen gemeinsam ist, dass sie eine Grundfläche von beliebiger Form aufweisen. Die Grundfläche ist vorzugsweise eben, kann aber auch Vertiefungen bzw. Erhöhungen aufweisen. Die Grundform erhebt sich sodann senkrecht oder in einem bestimmten Winkel in die Höhe. Die Dimensionen sind frei wählbar und werden nur durch Portionsgröße und Stabilität beschränkt.

Die Produkte weisen eine hervorragende Kalt- und Warmwasserlöslichkeit auf, die abhängt von Zusammensetzung und mechanischer Einwirkung beim Auflösen im Bereich von wenigen Sekunden bis wenigen Minuten liegen kann.

Das erfindungsgemäße Verfahren zeichnet sich dadurch aus, dass kristalline Zucker (wie Saccharose, Fructose, Glucose, Isomaltulose, Maltose etc.) mit Wasser oder einer wasserhaltigen Flüssigkeit, Dampf oder einem wässrigen Aerosol befeuchtet werden und auf einen Wassergehalt von 0,01-30 % Wasser gebracht werden. Dieser Gedanke berücksichtigt auch den Einsatz von Säften o. ä. zur Herstellung von Instantwürfeln. Anstelle von kristallinen Zucker können auch Amorphe oder Teilkristalline, Polysaccharide, Oligosaccharide sowie Milchbestandteile und Malzextakte eingesetzt werden. Die befeuchteten Kristalle werden mit den übrigen Zutaten im geeigneten Verhältnis gemischt. Eventuell kann auch die gesamte Mischung als solche befeuchtet werden. Die Mischung wird sodann in eine Matriz eingefüllt und leicht angepresst, wobei der Pressdruck recht gering sein kann. Anschließend werden die Produkte aus den Matrizen ausgestoßen und unter geeigneten Bedingungen getrocknet.

Instantprodukte, die eine geeignete Form, z. B. quaderförmig, aufweisen,
können sodann einzeln gewickelt werden. Es ist auch möglich, mehrere Produkte zu stapeln und als runde oder eckige Stangen zu verpacken. Die Produkte sind dermaßen zusammengesetzt, dass eine zusammenhängende Trägerformmatriz entsteht. Die Matriz führt zu folgenden proximativen Zusammensetzungen:
Trägerstoffanteil: 10 - 99 %
Extraktanteil: 0,01 - 80 %

Die erfindungsgemäßen Instantgetränke erfüllen folgende Anforderungen:
a) Zusammengesetzt aus Träger, Aromen, Extrakten sowie weiteren funktionellen oder ernährungsphysiologischen Zutaten.
b) Portioniert, falls nötig einzeln verpackt, Form variabel (beispielsweise quaderförmig, kreisförmig oder andere Form).
c) Heiß- und Kaltwasserlöslich

Die erfindungsgemäßen Instantprodukte können selbstverständlich auch für andere Produkte geeignet sein, wie beispielsweise Pudding, Dessertcremen, leicht süße Suppen oder Saucen, oder gar Kartoffelpüree. Dazu können entweder Zuckerarten eingesetzt werden, die wenig süß sind, oder dann agglomerierte Stärken/Maltodextrine. Die wichtigste Voraussetzung für unser Produkt ist, dass es mit Wasser oder einer anderen Flüssigkeit (heiß oder kalt) zubereitet wird. Ob das zubereitete Produkt nachher getrunken oder gegessen wird, ist abhängig von der Zusammensetzung des Instantproduktes und von der Dosierung, resp. von der Verdünnung mit Wasser.

### Beispiel 1 - Instanttee-Würfel

Komponenten : Kristallzucker, Fenchel-Anis-Kümmelextrakt für Kindertee im Verhältnis Zucker: Extrakt = 8:1.

Prozess: 40 g Zucker wurde in einer breiten Schale mit einem Wassersprühnebel (Aerosol) sehr leicht besprüht, so dass der Kristallzucker ca. 2.2-3.2 % Wasser aufnahm. Die befeuchteten Zuckerkristalle wurden sodann von Hand homogen verteilt. Anschließend wurde 5 g Tee-Extrakt eingemischt, und die Mischung wurde gemischt, bis alle Komponenten gleichmäßig verteilt waren.
Die Würfelherstellung erfolgte sodann in einer Matrize, wie sie beispielsweise für die Würfelzuckerherstellung eingesetzt wird. Die Masse wurde in quadratische Vertiefungen mit einer Grundfläche von 2 - 2.25 cm² gefüllt und von Hand mit einem Druck von 0.2 - 1 bar angedrückt. Die vorstehenden Reste wurden sodann abgestrichen. Dann wurde die Form gewendet, und mit dem die untere Abschlussfläche bildenden Stempel wurden die Würfel aus der Form gedrückt. Die Würfel wurden sodann in einem Umluftofen während 1 Stunde bei 90 - 100°C getrocknet und verpackt.

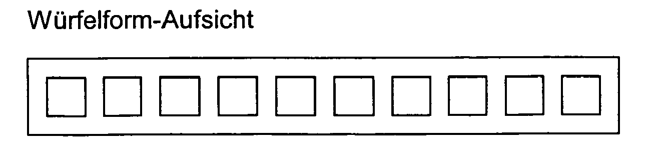

### Prozessparameter:

Befeuchtung Kristallzucker: 2.2 - 3.2 %
Druck (manuell): 0.2- 1 bar
Oberfläche/ Stück: ca. 2-2.25 cm²
Trocknungsparameter: 60 min bei 90 - 100° C
Gewichtsverlust beim Trocknen: 1.9 - 2.8 %

### Beispiel 2 - Instanttee-Würfel nicht quadratisch

Komponenten : Isomaltulose (kristallförmig), Fenchel-Anis-Kümmelextrakt für Kindertee im Verhältnis lsomaltulose: Extrakt = 8:1.

Prozess: 40 g Isomaltulose wurden in einem feinen Sieb über einen Dampfstrom gehalten, so dass die Isomaltulosekristalle ca. 2.2 -3.2 % Wasser aufnahmen. Die befeuchteten Isomaltulosekristalle wurden sodann von Hand homogen verteilt. Dann wurde 5 g Tee-Extrakt eingemischt, bis alle Komponenten gleichmäßig verteilt waren.

Die Formung erfolgt sodann in einer Matrize, in welcher Aussparungen beliebiger Formen, beispielsweise von Spielkartensymbolen eingebracht sind. Im vorliegenden Beispiel wurde die Masse in Vertiefungen, die Spielkartensymbole darstellen und eine Grundfläche von 2 - 2.25 cm² aufweisen, gefüllt und von Hand mit einem Druck von 0.5 -1.5 bar angedrückt. Die Oberfläche wurde sodann glattgestrichen. Danach wurde die Form gewendet, und mit dem die untere Abschlussfläche bildenden Stempel wurden die Würfel aus der Form gedrückt. Die Würfel wurden sodann in einem Umluftofen während 1 Stunde bei 90 - 100° C getrocknet, gekühlt und anschließend verpackt.

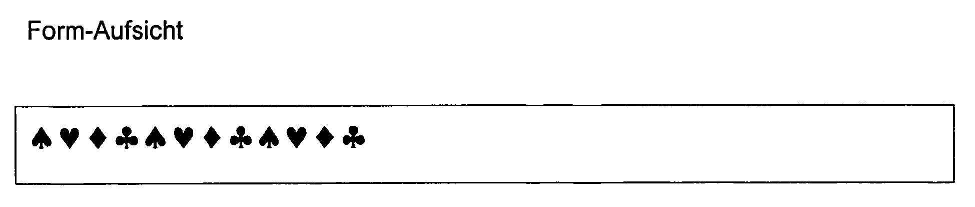

### Prozessparameter:

Befeuchtung Isomaltulosekristalle: 2.2 - 3.2 %
Druck (manuell): 0.5-1.5 bar
Oberfläche/ Stück: ca. 2-2.25 cm²
Trocknungsparameter: 60 min bei 90 - 100° C
Gewichtsverlust beim Trocknen: 1.9 - 2.8%

### Beispiel 3 - Instantkaffee-Würfel nicht quadratisch

Komponenten : Isomaltulose (kristallförmig), gefriergetrockneter Kaffee-Extrakt gemahlen im Verhältnis Isomaltulose: Extrakt = 2:1.

Prozess: 40 g Isomaltulose wurden in einem feinen Sieb über einen Dampfstrom gehalten, so dass die Isomaltulosekristalle ca. 2.2 - 4.5 % Wasser aufnahmen. Die befeuchteten Isomaltulosekristalle wurden sodann von Hand homogen verteilt. Dann wurde 20 g Kaffee-Extrakt eingemischt, bis alle Komponenten gleichmäßig verteilt waren.
Die Formung erfolgt sodann in einer Matrize, in welcher Aussparungen in der Form von Spielkartensymbolen eingebracht waren und eine Grundfläche von 2-2.25 cm² aufwiesen. Die Mischung wurde in die Matrizen gefüllt und von Hand mit einem Druck von 0.5 - 2.5 bar angedrückt. Die Oberfläche wurde sodann glattgestrichen. Dann wurde die Form gewendet, und mit dem die untere Abschlussfläche bildenden Stempel wurden die Würfel aus der Form gedrückt. Die Würfel wurden sodann in einem Vakuumschrank während 1 - 1.5 Stunden bei 80° C und einem absoluten Druck von 134 - 67 mbar getrocknet, gekühlt und anschließend verpackt.

### Prozessparameter:

Befeuchtung Isomaltulosekristalle: 2.2 - 4.5 %
Druck (manuell): 0.5- 2.5 bar
Oberfläche/ Stück: ca. 2-2.25 cm²
Trocknungsparameter: 90 min bei 80° C und 140 - 60 mbar abs. Druck Gewichtsverlust beim Trocknen: 1.5 - 3.5 %

### Beispiel 4 - Instanttee-Würfel nicht quadratisch, mit Volumenexpansion

Komponenten : Saccharose (kristallförmig), Tee-Extrakt Fenchel-Anis-Kümmel im Verhältnis Isomaltulose: Extrakt = 8:1.

Prozess: 40 g Zucker wurde in einer breiten Schale mit einem Wassersprühnebel (Aerosol) sehr leicht besprüht, so dass der Kristallzucker ca. 6.8 - 11.0 % Wasser aufnahm. Die befeuchteten Zuckerkristalle wurden sodann von Hand homogen verteilt. Anschließend wurde 5 g Tee-Extrakt eingemischt, und die Mischung wurde gemischt, bis alle Komponenten gleichmäßig verteilt waren.
Die Würfelherstellung erfolgte sodann in einer Matrize, wie sie beispielsweise für die Würfelzuckerherstellung eingesetzt wird. Die Masse wurde in quadratische Vertiefungen mit einer Grundfläche von 2 - 2.25 cm² gefüllt und von Hand mit einem Druck von 0.2 - 0.8 bar angedrückt. Die vorstehenden Reste wurden sodann abgestrichen. Dann wurde die Form gewendet, und mit dem die untere Abschlussfläche bildenden Stempel wurden die Würfel aus der Form gedrückt. Die Würfel wurden sodann in einem Vakuumschrank während 0.7 - 1.5 Stunden bei 90°C und einem absoluten Druck von 140 - 60 mbar getrocknet. Bei der Trocknung nahm das Volumen der Würfel in Abhängigkeit vom Wassergehalt und vom Druck während der Trocknung zu, und die Form wurde rundlicher. Die Produkte wurde sodann gekühlt und anschließend verpackt.

### Prozessparameter:

Befeuchtung Saccharose: 6.8 - 11.0 %
Druck (manuell): 0.5- 0.8 bar
Oberfläche/ Stück: ca. 2-2.25 cm²
Trocknungsparameter: 40 - 90 min bei 80 - 90° C und 140 - 60 mbar abs. Druck Gewichtsverlust beim Trocknen: 5.9 - 9.0 %

### Beispiel 5 - Instantfrühstücksgetränk

Komponenten : Käufliches Frühstücksgetränkepulver (Kakao)

Prozess: 40 g käufliches, zuckerhaltiges Kakaogetränkepulverwurde in einer breiten Schale mit einem Wassersprühnebel (Aerosol) sehr leicht besprüht, so dass der Frühstücksgetränkepulver ca. 2.5 -3.7 % Wasser aufnahm. Das befeuchtete Frühstücksgetränkepulver wurde sodann von Hand homogen verteilt.
Die Formung erfolgt sodann in einer Matrize, in welcher Aussparungen in der Form von Spielkartensymbolen eingebracht waren und eine Grundfläche von 2 - 2.25 cm² aufwiesen. Das befeuchtete Kakaogetränkepulver wurde in die Matrizen gefüllt und von Hand mit einem Druck von 0.5 - 2.5 bar angedrückt. Die Oberfläche wurde sodann glattgestrichen. Dann wurde die Form gewendet, und mit dem die untere Abschlussfläche bildenden Stempel wurden die Würfel aus der Form gedrückt. Die Würfel wurden sodann in einem Umluftofen während 1 Stunde bei 90 - 100° C getrocknet und verpackt.

### Prozessparameter:

Befeuchtung Kakaogetränkepulver: 2.5 - 3.7 %
Druck (manuell): 0.5- 1.5 bar
Oberfläche/ Stück: ca. 2-2.25 cm²
Trocknungsparameter: 60 min bei 90 - 100° C
Gewichtsverlust beim Trocknen: 2.5 - 3.7 %

### Beispiel 6 - Instantfrühstücksgetränk mit Milchpulver

Komponenten : Käufliches, malzhaltiges Frühstücksgetränkepulver, Isomaltulose, Magermilchpulver im Verhältnis = 3:4:2.

Prozess: 20 g lsomaltulose wurde in einer breiten Schale mit einem Wassersprühnebel (Aerosol) sehr leicht besprüht, so dass die lsomaltulose ca. 0.2 - 1.8 % Wasser aufnahm. Anschließend wurden 15 g käufliches, zucker- und malzhaltiges Frühstücksgetränkepulver sowie 10 g Magermilchpulver eingemischt und sodann von Hand homogen verteilt.
Die Formung erfolgt sodann in einer Matrize, in welcher Aussparungen in der Form von Spielkartensymbolen eingebracht waren und eine Grundfläche von 2 -2.25 cm² aufwiesen. Die Mischung wurde in die Matrizen gefüllt und von Hand mit einem Druck von 0.1 - 2.5 bar angedrückt. Die Oberfläche wurde sodann glattgestrichen.
Dann wurde die Form gewendet, und mit dem die untere Abschlussfläche bildenden Stempel wurden die Würfel aus der Form gedrückt. Die Würfel wurden sodann in einem Umluftofen während 1 Stunde bei 90 - 100° C getrocknet und verpackt.

### Prozessparameter:

Befeuchtung Isomaltulose: 0.2 - 1.8 %
Druck (manuell): 0.1- 0.7 bar
Oberfläche/ Stück: ca. 2-2.25 cm²
Trocknungsparameter: 60 min bei 70 - 80° C
Gewichtsverlust beim Trocknen: 0.1 - 0.8 %

### Beispiel 7 - Milchpulverstengel gezuckert

Komponenten : Laktose, Magermilchpulver im Verhältnis = 1:1

Prozess: 40 g Laktose wurde in einer breiten Schale mit einem Wassersprühnebel (Aerosol) sehr leicht besprüht, so dass die Laktose ca. 2.0 - 5.6 % Wasser aufnahm. Anschließend wurden 40 g Magermilchpulver eingemischt und sodann von Hand homogen verteilt.

Die Formung erfolgt sodann in einer Matrize, in welcher Aussparungen in der Form von länglichen Quadern eingebracht waren und eine Grundfläche von 4 - 6 cm² aufwiesen. Die Mischung wurde in die Matrizen gefüllt und von Hand mit einem Druck von 0.1 - 2.5 bar angedrückt. Die Oberfläche wurde sodann glattgestrichen. Dann wurde die Form gewendet, und mit dem die untere Abschlussfläche bildenden Stempel wurden die Würfel aus der Form gedrückt. Die Würfel wurden sodann in einem Umluftofen während 1.0 Stunde bei 60 - 80° C getrocknet und verpackt.

### Prozessparameter:

Befeuchtung Laktose : 2.0 - 5.6 %
Druck (manuell): 0.1- 0.8 bar
Oberfläche/ Stück: ca. 4 - 6cm²
Trocknungsparameter: 90 min bei 75° C
Gewichtsverlust beim Trocknen: 1.0 - 2.8 %

## Patentansprüche

1. Instantprodukt mit mindestens einem löslichen, vorzugsweise pulvrigen Lebensmittelprodukt,
**gekennzeichnet durch**
mindestens einen zuckerartigen, mit dem Lebensmittelprodukt vermischten und verbindbaren Trägerstoff, der eine definierte Form des Instantprodukts erlaubt.

2. Instantprodukt nach Anspruch 1,
**dadurch gekennzeichnet,**
**dass** als Lebensmittelprodukt insbesondere pflanzliche Extrakte vorgesehen sind.

3. Instantprodukt nach Anspruch 1 oder 2,
**dadurch gekennzeichnet,**
**dass** das Lebensmittelprodukt aus Tee-Extrakt, Kaffee-Extrakt, Fruchtextrakt, Malzextrakt, Kakaopulver oder dergleichen besteht.

4. Instantprodukt nach einem der Ansprüche 1 bis 3,
**dadurch gekennzeichnet,**
**dass** das Instantprodukt auch mindestens einen der nachstehenden Zusätze aufweist: Aromen, Verdickungsmittel, Farbstoffe, Carbonate, Intensivsüßstoffe, Nahrungsfasern, Polysaccharide, Milchbestandteile, Vitamine, Mineralstoffe oder dergleichen.

5. Instantprodukt nach einem der Ansprüche 1 bis 4
**dadurch gekennzeichnet,**
**dass** als Trägerstoff vorgesehen sein können: kristalline Zuckerart wie Saccharose, Fructose, Glucose, Isomaltulose, Maltose, Lactose usw., kristalline Zuckeraustauschstoffe, Polysaccharide, Oligosaccharide.

6. Instantprodukt nach einem der Ansprüche 1 bis 5,
**gekennzeichnet durch**
eine kristalline Zuckermatrix oder eine aus anderen kristallinen Stoffen (Zuckeraustauschstoffe) oder aus Agglomeraten von amorph erstarrten Komponenten (Zuckerarten, Zuckeraustauschstoffe, Polysaccharide, Oligosaccharide, Malzextrakte oder Milchbestandteile etc.) bestehende Matrix, die von den anderen Bestandteilen durchsetzt ist.

7. Instantprodukt nach einem der Ansprüche 1 bis 6,
**dadurch gekennzeichnet,**
**dass** die Zusammensetzung und Dosierung des Produkts derart gewählt ist, dass eine definierte Portion, d. h. 1-5 Stücke des Produkts, eine Portion Kalt- oder Heißgetränk ergibt.

8. Instantprodukt nach einem der Ansprüche 1 bis 7,
**dadurch gekennzeichnet,**
**dass** das Produkt vor seiner betriebsgemäßen Benutzung formstabil ist.

9. Instantprodukt nach einem der Ansprüche 1 bis 8,
**dadurch gekennzeichnet,**
**dass** die Form des Instantprodukts vorzugsweise eine definierte geometrische Figur, wie Zylinder, Plättchen, Quader, Ring oder dergleichen, ist.

10. Instantprodukt nach einem der Ansprüche 1 bis 9,
**gekennzeichnet durch**
Kalt- und/oder Warmwasserlöslichkeit, die abhängig von Zusammensetzung und mechanischer Einwirkung beim Auflösen im Bereich von wenigen Sekunden bis wenigen Minuten liegt.

11. Instantprodukt nach einem der Ansprüche 1 bis 10,
**dadurch gekennzeichnet,**
**dass** der Trägerstoffanteil 10-99 % beträgt, während der Extraktanteil 0,01-80 % beträgt.

12. Instantprodukt mit mindestens einem löslichen, vorzugsweise pulvrigen Lebensmittelprodukt,
**gekennzeichnet durch**
einen definierten Körper aus Isomaltulose.

13. Instantprodukt nach Anspruch 12,
**dadurch gekennzeichnet,**
**dass** es die Form eines Würfels, Quaders, Kugel oder dergleichen aufweist.

14. Verfahren zur Herstellung eines Instantprodukts nach einem der Ansprüche 1 bis 10,
**gekennzeichnet durch**
folgende Schritte:
a) eine definierte Menge an Kristallen von Trägerstoffen wird befeuchtet und mit einer definierten Menge der übrigen Zutaten im geeigneten Verhältnis gemischt,
b) die Mischung wird sodann in eine Matrize gebracht und leicht angepresst,
c) schließlich werden die Instantprodukte aus den Matrizen ausgestoßen und unter geeigneten Bedingungen getrocknet.
